Europäisches Patentamt
European Patent Office
Office européen des brevets

(19)

(11) Publication number: **0 021 770**
**A1**

# (12) EUROPEAN PATENT APPLICATION

(21) Application number: 80302028.8

(22) Date of filing: 16.06.80

(51) Int. Cl.³: C 09 D 3/48
C 08 K 5/34
//(C08K5/34, C08L61/32)

(30) Priority: 18.06.79 US 49219
18.06.79 US 49220

(43) Date of publication of application:
07.01.81 Bulletin 81/1

(84) Designated Contracting States:
AT BE CH DE FR GB IT LI LU NL SE

(71) Applicant: SCM CORPORATION
299 Park Avenue
New York New York(US)

(72) Inventor: Turpin, Edward T.
7743 Murray Ridge Road
Elyria Ohio(US)

(74) Representative: Baillie, Iain Cameron et al,
c/o Ladas & Parry Blumenstrasse 48
D-8000 München 2(DE)

## (54) A thermosetting powder coating composition and process for preparing same.

(57) The invention pertains to a powder coating composition comprising on a weight basis a mixture of 10% to 70% of a polymeric glycoluril cross-linker, and 30% to 90% of a reactive polymer whereby the polymeric glycoluril cross-links with reactive hydroxyl, carboxyl, and/or amide groups upon exposure to heat. Preferred compositions are based on a self-curing polymer containing methylol and/or alkoxy groups adapted to cross-link with coreactive hydroxyl, carboxyl, or amide groups on the same polymer.

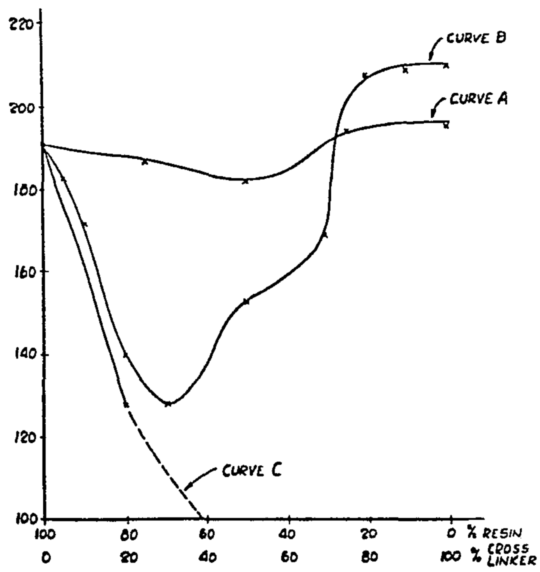


Fig. I

EP 0 021 770 A1

# A THERMO SETTING POWDER CONTAINING COMPOSITION AND PROCESS FOR PREPARING SAME

This invention relates to improved thermosetting powder paints and more particularly pertains to polymeric glycoluril derivatives for cross-linking reactive polymers having reactive hydroxyl, carboxyl, or amide groups upon exposure to heat.

Powder paints are ordinarily manufactured from raw batch ingredients comprising resinous binders, opacifying and filler pigmentary solids, plasticizers, and other additives to provide opacity, good film properties, and adhesion to substrates. The raw batch ingredients are uniformly mixed, formed into coherent extrudate by hot extrusion, and then comminuted to form small particle powder paints which are ordinarily free flowing at normal room temperature. Powder paints usually are uniform small powders passing 325 mesh or less than about 44 microns. Powder paints contain little or no fugitive solvents and depend upon their own inherent characteristics of the powder to melt, level, coalesce, and fuse to form an attractive coherent film on the substrate. The powder must not fuse in the container and cannot be subjected to cold flow so as to maintain individual powder particles prior to use.

In recent years, thermosetting powder paints have become particularly suitable for use in commercial industrial process particularly since powder paints are essentially free of organic solvents whereby economic and social benefits are achieved by reduced air pollution,

reduced energy use, and reduced health and fire hazards. Present commercial powder coatings often exhibit poor weathering properties although some expensive powder paints can obtain satisfactory weathering. Other difficulties often encountered in powder paints are caking or blocking of the powder in use and other mechanical application properties. Recently issued U.S. Patent No. 4,118,437 and U.S. Patent No. 4,064,191 disclose cross-linkable powder coatings wherein the cross-linking component is an alkylated glycoluril derivative.

It now has been found that an economical and substantially improved powder coating composition can be achieved by utilizing a polymeric cross-linker comprising an alkoxy methyl or methylol functional polymer produced by copolymerizing a glycoluril with a diol or another glycoluril. The polymeric glycoluril can comprise as low as 10% by weight of the thermosetting powder coating binder composition which exhibits excellent minimum tack greater than 70°C and particularly important for non-fusing and non-blocking powder coatings. A preferred aspect of the invention pertains to a single component self-curing polymer comprising a moderately low molecular weight polymer containing methylol and/or tetramethylol groups which are coreacting with preferably hydroxyl groups on the same polymer.

Briefly, the invention pertains to a powder coating composition comprising on weight basis a mixture of 10% to 70% of a polymeric glycoluril cross-linker, and 30% to 90% of a reactive polymer whereby the polymeric glycoluril cross-links with reactive hydroxyl, carboxyl, and/or amide groups upon exposure to heat. Preferred compositions are based on a self-curing polymer containing methylol and/or alkoxy groups adapted to cross-link with coreactive hydroxyl, carboxyl, or amide groups on the same plymer.

Figure 1 illustrates the tack temperatures as a function of matrix polymer/cross-linking component and

compares compositions of this invention with prior art compositions.

This invention pertains to thermosetting powder coatings primarily based upon a polymeric glycoluril cross-linking polymer adapted to cross-link a reactive matrix polymer upon application of heat.

Referring first to the Drawings, Figure 1 illustrates the tack temperature as a function of matrix polymer/cross-linking component for compositions of this invention as well as prior art compositions. The x-axis in Figure 1 indicates a weight ratio of matrix polymer/ cross-linker wherein the cross-linking components are varied. Curve A ilustrates the composition of this invention based on a polymeric glycoluril cross-linker. Curve B illustrates the same composition containing a monomeric glycoluril cross-linker in accordance with U.S. Patent No. 4,118,437. Curve C similarly illustrates a melamine cross-linker consisting of hexamethoxymethyl melamine (cymel 300). The highly desirable Curve A provides approximately a consistent flat curve relative to Curves B and C which progressively depress tack temperatures and consequently increase undesirable caking or agglomeration of powder.

Referring next to the polymeric glycoluril cross-linker, the glycoluril polymer is alkoxy-methyl or alkoxy methylol polymer having a molecular weight between 500 and 5000 and preferably between 600 and 1500. The glycoluril polymer can be formed by self-condensation of tetra-alkoxy-methyl glycoluril and/or a tetra-methylol glycoluril, or a consensation copolymer of a diol or diacid or diamide or polymer diol or polymer diacid or diamide with a tetra-alkoxy-methyl glycoluril and/or a tetra-methylol glycoluril wherein the resulting glycoluril polymer contains reactive methylol or alkoxy methyl groups. Diols are preferred and suitable diols for the copolymer can include simple monomer diols such as glycols, low molecular weight polyester diols, and polyurethane diols

such as for example, hydrogenated bisphenol-A, cyclohexane dimethanol, and neopentyl terephthalate. The low molecular weight diols can be advantageously utilized to increase the molecular weight of the polymeric glycoluril to achieve highly desirable tack temperatures above about 70°C which are necessary to prevent caking and blocking of the powder paint particles. Preferably, the finished powder paint has a tack temperature in the range of 75°C to 95°C. Suitable monomeric diols ordinarily are free of alkyl ether groups, are liquid although can have melting points as high as 150°C, a hydroxyl content by weight of 10% to 55%, and molecular weights between about 60 and 350. Polyester diols can have a resin tack temperature of about 40°C to 70°C, hydroxyl of 3% to 15% by weight, and molecular weight between about 200 and 1000. Gycoluril copolymers containing copolymerized diols can contain between 10% and 70% by weight diol copolymerized with alkoxy methyl or methylol glycoluril. Self-condensation glycoluril polymer can be produced by homopolymerizing units of tetra-alkoxy methyl glycoluril, or homopolymerizing tetra methylol glycoluril, or by copolymerizing a tetra-alkoxy methyl glycoluril and a tetra-methylol glycoluril. In either the diol copolymer or the self-condenstion polymers, and alkoxy methyl groups and/or the methylol groups comprise between about 5% and 40% by weight of the polymeric glycoluril cross-linking component.

Glycolurils are disclosed in U.S. Patent No. 4,064,191 and are also known as acetylenediureas. Glycolurils are derived by reacting two moles of urea with one mole of glyoxal to provide a complex ring structure illustrated as follows:

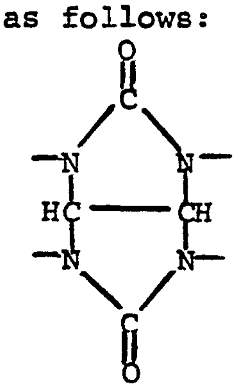

The foregoing glycoluril is referred to as "G" in the following polymeric structures illustrating the polymeric glycoluril in accordance with invention. The preparation of various glycolurils is illustrated in U.S. Patent No. 4,064,191 such as tetra-methylol glycoluril, tetrabutoxymethyl glycoluril, partially methylolated glycoluril, tetramethoxymethyl glycoluril, and dimethoxydiethoxy glycoluril. Useful glycoluril derivatives include for example, mono- and dimethylether of dimethylol glycoluril, the trimethylether of tetramethylol glycoluril, the tetramethylether of tetramethylol glycoluril, tetrakisethoxymethyl glycoluril, tetrakisopropoxymethyl glycoluril, tetrakisbutoxymethyl glycoluril, tetrakisamyloxymethyl glycoluril, tetrakishexoxymethyl glycoluril and the like. A self-condensate glycoluril polymer can be illustrated as follows:

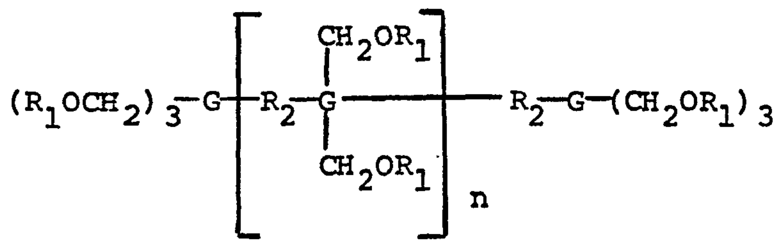

wherein:

G= said glycoluril structure

$R_1$= H or alkyl group having 1 to 4 carbon atoms

$R_2$= $-CH_2$ or $(-CH_2-O-CH_2-)$

n= 1 to 5 units

Similarly, a diol condensate copolymer is illustrated as follows:

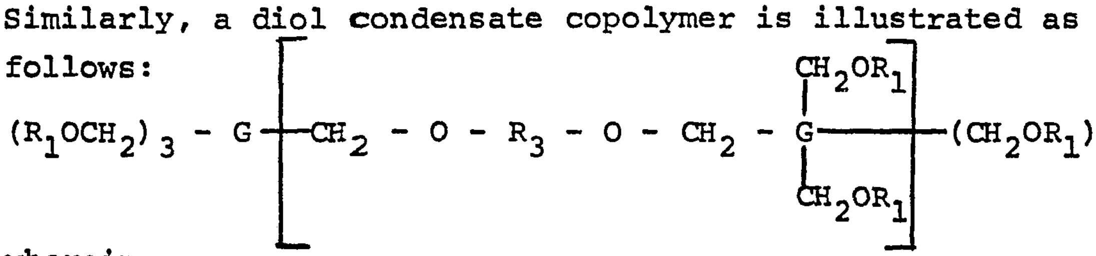

wherein:

G = said glycoluril structure

$R_1$= H or alkyl group having 1 to 4 carbon atoms

$R_3$= diol with hydroxyl groups removed

n= 1 to 4 units

Thus, the polymeric glycoluril contains at least two polymerized glycoluril monomer units to provide a polymer chain

containing at least two glycoluril structures (G). The molecular weight of useful polymeric glycoluril condensate polymers is between 500 and 5000 and preferably between 600 and 1500. The polymeric glycoluril provides an excellent cross-linking component for reactive matrix polymers in powder coating compositions.

Preparation of the polymeric glycoluril can be facilitated by the inclusion of between 0.5% and 5% by weight acid catalyst. Amine or ammonia can be added to buffer the acid catalyst and moderate the reaction rate whereby the acid catalyst is neutralized up to about 300%. The rate of reaction can be varied depending on the acid and amine strength, the degree of neutralization, and the level of acid catalyst used. Acid can be added first to promote the reaction and then amine can be added to control and prevent further reaction while the polymer is being discharged.

Referring next to the reactive polymer adapted to be cross-linked by the polymeric glycoluril cross-linker, the reactive polymer can be a polymer having reactive hydroxyls, or carboxyls, or amide groups. The polymer can have a molecular weight between about 100 and 100,000 and contains by weight between 1% and 50% reactive carboxyl, hydroxyl or amide groups, or combinations thereof. These reactive groups are adapted to react with the methylol and/or alkoxy-methyl groups on the polymeric glycoluril. Generally, the polymers can be epoxy polymers, polyester polymer, acrylic polymers, phenolic polymers, vinyl polymers, and similar polymers, provided such polymers have a tack temperature above 75°C to provide adequate storage stability and prevent caking. A tack temperature is the lowest temperature above which dry solid polymer particles tend to cake or block within a 60 second time period. The reactive polymers are preferably polymers with a melt temperature or Tg above about 75°C generally between 80°C and 200°C, and preferably between 100°C and 140°C. All polymers can have reactive hydroxyl, carboxyl or amide

groups attached to the polymer such as by esterification in polyester polymer or by addition polymerization of carboxyl or hydroxyl monomers in acrylic or vinyl polymers. Particularly preferred reactive polymers contain reactive hydroxyl groups. Hydroxyl or carboxyl terminated polyester polymers can be produced by an esterification reaction of glycols together with saturated, unsaturated, aliphatic, or aromatic dicarboxylic acids such as phthalic,isophthalic, terephthalic, maleic, fumaric, succinic, adipic, azelaic, malonic and similar dicarboxylic acids. The preferred glycols are aliphatic glycols such as 1,3-butylene glycol or 1,4-butylene glycol: ethylene glycol and propylene glycol: neopentyl glycol as well as minor amounts of polyols such as trimethylol propane or ethane, or petaerythritol. The glycols are reacted with the dicarboxylic acids at temperatures preferably above about 200°C to substantially coreact all the available carboxylic acid to provide a hydroxyl polyester. Conversely, excess dicarboxylic acid is reacted completely with lesser equivalents of polyol to provide a carboxyl terminated polyester polymer. The excess glycol or carboxylic component can be about 20% to 100% molar equivalent excess of the other component to provide a hydroxyl or carboxyl terminated polyester adapted to be cross-linked by the polymeric glycoluril component. Vinyl and acrylic polymers produced from copolymerization of ethylenic monomers can contain reactive hydroxyl, carboxyl, or amide groups by copolymerizing minor amounts of functional ethylenic monomers such as acrylic or methacrylic acid for carboxyl groups, hydroxyethyl, or hydroxy-propyl acrylate or similar hydroxyl alkyl acrylates or methacrylates to provide for hydroxyl groups, and acrylamide or similar alkylamides for amide groups. Epoxy and phenolic polymers can have reactive functional groups esterified or grafted onto the polymer chain to provide a reactive polymer. Reactive polymers in accordance with this invention contain between 1% and 50% by weight functional hydroxyl, carboxyl, and/or amide groups, and

preferably 1% to 12% of said reactive functional groups.

The polymeric glycoluril cross-linker and the reactive polymer can be combined to provide a homogeneous mixture on a weight basis of preferably 10% to 70% of polymeric glycoluril mixed with 30% to 90% reactive polymer. The most preferred and optimized combination comprises 10% to 30% polymeric glycoluril and 70% to 90% reactive polymer. The combination exhibits a tack temperature of at least 70°C.

The polymeric glycoluril and the reactive polymer can be thoroughly and uniformly mixed by mildly heating the solid materials with pigmentary solids, plasticizers and other components to uniformly blend the polymeric components with the pigmentary solids. Pigments can ordinarily include opacifying pigments such as titanium dioxide, zinc oxide, leaded zinc oxide, titanium calcium, as well as tinting pigment such as carbon black, yellow oxides, brown oxides, tan oxides, raw and burnt sienna or umber, chromium oxide green, phthalocyanine green, phthalonitrile blue, ultra-marine blue, cadmium pigments, chromium pigments, and the like. Filler pigments such as clay, silica, talc, mica, wollastonite, wood flower and the like can be added. The raw batch ingredients can be thoroughly premixed in a high intensity mixer such as a high speed dry blender whereby the materials are discharged in a uniform mixture. The high intensity mixer discharges the batch components to a heated screw extruder wherein the extruder is internally heated by an indirect heating fluid such as steam, hot water, or synthetic oil whereupon the exit extruder temperature is regulated according to the type of powder paint being produced but generally is between about 90°C and 150°C at the heated exit die of the screw fed extruder. The extrudate emerges from the extruder as a rope which is chilled and squeezed to a thin ribbon by cooling rolls then passes onto a water-cooled stainless steel conveyor belt whereby the plastic ribbon extrudate fully hardens. The cooled extrudate then

passes through a mechanical comminuter disposed at the end of the cooled stainless steel belt to efficiently break the fragile brittle ribbon into very small flakes. The small flakes are then discharged into a cooled mill, such as a hammer mill, to grind the small flakes into powder paint of less than 325 mesh and preferably passing a 200 mesh U.S. Standard Sieve Screen whereupon the powder can be further classified into particle size if desired. The resulting powder coatings advantageously exhibit a tack temperature well above 70°C whereby the dry powder does not cake or block, can be easily spray applied, and fused with moderate heat to provide a thermoset continuous surface coating.

The powder paints in accordance with this invention can be applied to a steel panel substrate and moderately heated between temperatures of about 140°C and 205°C for 5 to 30 minutes to obtain desirable flow out and cure. The advantages of this invention are further illustrated in the following examples.

The preferred paint of this invention is primarily based on a single-component, self-curing glycoluril polymer by partial condensation of tetramethylol and/or tetra-alkoxy methyl glycoluril preferably with a poly-hydroxy (or carboxyl, or amide) material on a weight proportion to provide broadly a ratio of 1/2 to 2/1 equivalents of reactive glycoluril functions to reactive hydroxyls (or carboxyls or amides). An approximate 1/1 equivalent ratio of methylol and/or alkoxy methyl groups to reactive hydroxyl groups is preferred. Thus, the single-component self-curing polymer contains at least 1.0 methylol and/or alkoxy methyl group and at least 1.0 other reactive group of hydroxyl and/or carboxyl and/or amide group per polymer unit. Preferably, the self-curing, single-component polymer contains between 2 and 8 total reactive groups per polymer unit. The molecular weight of the final single component resin is between about 400 and 4000 and preferably between 800 and 2500. The methylol and/or alkoxy-methyl equivalent

weight of the self-curing polymer can be between 200 and 2500 and preferably between 400 and 1500. The self-curing glycoluril polymer can be illustrated structurally as follows:

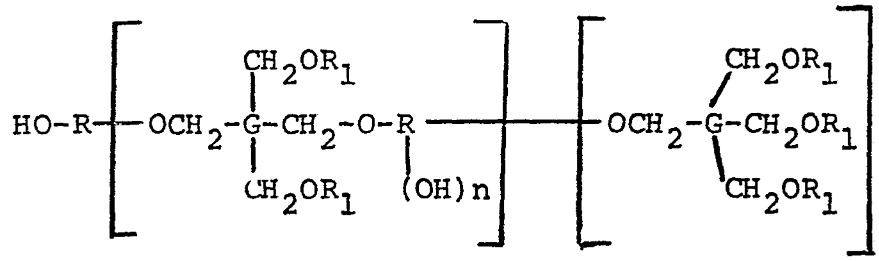

where,

R = Polyol minus hydroxyls

$R_1$ = H or $C_1$-$C_4$alkyl

m = 0-2

n = 0-1

p = 0-1

2m +3p = 1-4

mn + 1 =1-4

Ratio $\frac{2m+3p}{mn+1}$ = 0.5 - 2.0, preferably 0.8-1.2

The polyfunctional reactive component for copolymerizing with the foregoing glycoluril to provide a single-component self-curing polymer is preferably a poly-hydroxy material such as a simple diol, triol, tetrol and similar simple polyols such as glycols, low molecular weight polyester diols, hydrogenated bisphenol-A, and 1-4 cyclohexane dimethanol; and polymeric polyols such as polyester polyols, hydroxyl functional acrylics, styrene-allyl alcohols copolymers and similar hydroxy polymers. Generally, the polymers can be epoxy polymers, polyester polymer, acrylic polymers, phenolic polymers, vinyl polymers, and similar polymers, provided such polymers result in a final tack temperature above 75°C for the final condensate to provide adequate storage stability and prevent caking. A tack temperature is the lowest temperature above which dry solid polymer particles tend to cake or block within a 60-second time period. The reactive hydroxyl, carboxyl, or amide component can contain reactive functional equivalent between about 2 and 6 reactive groups per molecular and preferably, 2 to 3 reactive groups

per molecule. The molecular weight of the reactive functional component can be between 62 and 3000 and preferably between 62 and 2000. The reactive hydroxyl component (carboxyl, amide) can be simple monomeric units or oligmeric units or low molecular weight polymeric units. Hydroxyl or carboxyl terminated polyester polymers can be produced by an esterification reaction of glycols together with saturated, unsaturated, aliphatic, or aromatic dicarboxylic acids such as phthalic, isophthalic, terephthalic, maleic, fumaric, succinic, adipic, azelaic, malonic and similar dicarboxylic acids. The preferred glycols are aliphatic glycols such as 1,3-butylene glycol or 1,4-butylene glycol; ethylene glycol and propylene glycols; neopentyl glycol as well as minor amounts of polyols such as trimethylol propane or ethane, or pentaerythritol. The glycols are reacted with the dicarboxylic acids at temperatures preferably above about 200°C to substantially coreact all the available carboxylic acid to provide a hydroxyl polyester. Conversely, excess dicarboxylic acid is reacted completely with lesser equivalents of polyol to provide a carboxyl terminated polyester polymer. Vinyl and acrylic polymers produced from copolymerization of ethylenic monomers can contain reactive hydroxyl, carboxyl, or amide groups by copolymerizing minor amounts of functional ethylenic monomers such as acrylic or methacrylic acid for carboxyl groups, hydroxyethyl, or hydroxypropyl acrylate or similar hydroxy alkyl acrylates or methacrylates to provide for hydroxyl groups, and acrylamide or similar amides for amide groups. Epoxy and phenolic polymers can have reactive functional groups esterified or grafted onto the polymer chain to provide a reactive polymer.

The self-curing glycoluril copolymer contains at least 1 methylol and/or alkoxy methyl group and at least 1 hydroxyl (carboxyl, amide) group per copolymer unit molecule and preferably, in a 1 to 1 ratio. Thus, the copolymer contains at least two total coreactive groups but not more than 8 total coreactive groups per copolymer

unit wherein at least one group is a methylol or alkoxy methyl and at least one group is a coreactive hydroxyl, carboxyl and/or amide group. The molecular weight of the self-curing polymer is between about 400 and 4000 and preferably, 200 to 2500. On a weight basis, the self-curing polymer contains between 8% and 70% glycoluril compound and the remaining being copolymerized component containing reactive hydroxyl, carboxyl, or amide groups. The combined methylol and/or alkoxy methyl equivalent weight can be between 150 and 5000 and preferably between 500 and 2000. The hydroxyl (carboxyl, amide) equivalent weight can be between 200 and 2500 and preferably between 400 and 1500.

In accordance with the process of this invention, the self-curing glycoluril copolymer can be synthesized in the presence of an acid catalyst by partial condensation of a tetra-methylol and/or tetra-alkoxy methyl with a hydroxyl, carboxyl, or amide containing polymer. The acid catalyst preferably is a strong acid catalyst such as a sulphonic acid and the reaction temperature can be between about 120°C and 200°C and preferably between about 140°C and 180°C. the amount of acid catalyst added is based upon the amount of glycoluril compound and generally in the amount of 0.02 to 0.2 acid equivalents per 1000 grams of glycoluril compound. An amine buffer can be used in conjunction with the acid to properly control the reaction rate. Additional amine can be added to stabilize the resin toward the end of the reaction and during the discharge of the finished resinous polymer. The amount of organic amine can be in amounts equivalent to about 0 to 0.4 base equivalents per 1000 grams of glycoluril compound. A suitable equivalent ratio of base to acid in the reaction mixture can be between 1 to 2 equivalent parts base/acid to achieve polymer stability during discharge. At the desired end point, the removal of by-product alcohol can be terminated by stopping the distillation and then add additional amine to neutralize the acid

catalyst and effectively prevent further polymerization. A versatile aspect of the process of this invention is that the alcohol portion of the starting alkoxy-methyl glycoluril compound can be displaced by a higher boiling alcohol which can be added to the reaction mixture along with the poly-hydroxy material. A higher boiling alcohol for instance, can displace the alkoxy group totally or partially and can be utilized to prevent gassing during the curing step which can result in pinholes in the cured film. Useful higher boiling alcohols for degassing are usually ring-type alcohols such as benzyl alcohol, benzoin and cyclohexanol. The type and the amount of alcohol can be determined relative to the tack temperature depressant effect such alcohol may have on the finished resin composition.

The self-cross-linking polymer can be thoroughly and uniformly mixed by mildly heating the solid materials with pigmentary solids, plasticizers, and other components to uniformly blend the components. Pigments can ordinarily include opacifying pigments such as titanium dioxide, zinc oxide, leaded zinc oxide, titanium calcium, as well as tinting pigment such as carbon black, yellow oxides, brown oxides, tan oxides, raw and burnt sienna or umber, chromium oxide green, pthalocyanine green, phthalonitrile blue, ultra-marine blue, cadmium pigments, chromium pigments, and the like. Filler pigments such as clay, silica, talc, mica, wollastonite, wood flower and the like can be added. The raw batch ingredients can be thoroughly premixed in a high intensity mixer such as a high speed dry blender whereby the materials are discharged in a uniform mixture. The high intensity mixer discharges the batch components to a heated screw extruder wherein the extruder is internally heated by an indirect heating fluid such as steam, hot water, or synthetic oil whereupon the exit extruder temperature is regulated according to the type of powder paint being produced but generally is between about 90°C and 150°C at

the heated exited die of the screw fed extruder. The extrudate emerges from the extruder as a rope which is chilled and squeezed to a thin ribbon by cooling rolls then passes onto a water cooled stainless steel conveyor belt whereby the plastic ribbon extrudate fully hardens. The cooled extrudate then passes through a mechanical comminutor disposed at the end of the cooled stainless steel belt to efficiently break the fragile brittle ribbon into very small flakes. The small flakes are then discharged into a cooled mill, such as a hammer mill, to grind the small particles into powder paint of less than 325 mesh and preferably passing a 200 mesh U.S. Standard Sieve Screen whereupon the powder can be further classified into particle size if desired. The resulting powder coatings advantageously exhibit a tack temperature well above 70°C whereby the dry powder does not cake or block, can be easily spray applied, and fused with moderate heat to provide a thermoset continuous surface coating.

The powder paints in accordance with this invention can be applied to a steel panel substrate and moderately heated between temperatures of about 140°C and 205°C for 5 to 30 minutes to obtain desirable flow out and cure. The advantages of this invention are further illustrated in the Example 15.

## EXAMPLE 1

### Glycoluril Prepolymer Condensate A

Into a reaction vessel equipped with stirrer, thermometer, nitrogen inlet tube, distillation head and condenser, was charged 2000 grams of tetramethoxymethyl glycoluril which was melted and heated to 110°C. 32 grams sulfamic acid (Polycat 200) catalyst was added over a 30-minute period at 110°C to 120°C to control foaming. The contents were then upheated to a temperature of 170°C over a period of 2 hours. The batch was held at 170°C until a tack temperature of 80°C to 85°C was reached and then 32 grams of amine (Quadrol, i.e. 1 mole ethylene diamine reacted with 4 moles propylene oxide) were added

and stirred in. The batch was then discharged into a tray and cooled to room temperature. This self-condensed prepolymer of TMMGU had a tack temperature of 84°C, a viscosity at 50% non-volatile in meta-pyrol of D on the Gardner-Holdt Scale, and a methoxy equivalent weight (MEW) of 143.

The distillate (296 grams) consisted of 161 grams dimethylformal, 108 grams methanol, and 27 grams formaldehyde by gas chromatographic analysis. The presence of methanol and formaldehyde in the distillate indicates the presence of some methylol($-CH_2OH$) groups in the original TMMGU. The methoxy equivalent weight (MEW) was determined by reaction of a sample with a large excess of ethylene glycol mono-butyl ether using 3.0%, based on the TMMGU, of Polycat 200 catalyst. The distillate was analyzed for methanol content by gas chromatographic analysis. MEW is given by the formula:

$$MEW = \frac{32.0x\ S}{M}$$

where, S = sample size

M = Methanol content of distillate in grams

Glycoluril Prepolymer Condensate B

Into a reaction vessel equipped as in Example A was charged 1064 grams tetramethoxymethyl glycoluril (TMMGU) and 532 grams hydrogenated bisphenol-A which was melted and heated to 120°C. 14 Grams of Polycat 200 catalyst was added slowly over a 30-minute period at 110°-120°C to control foaming. The batch temperature was then raised slowly to 160°C and foaming controlled with 2 grams additions of Quadrol. Total Quadrol added is 10.4 grams. Upon reaching a tack temperature of 80-85°C, the batch was discharged into a tray. The product, a methoxy-methyl-functional copolymer of TMMGU and HBPA, has a tack temperature of 84°C, a viscosity at 50% non-volatile content in meta-pyrol of K and a methoxy equivalent weight of 212. A small amount of self-condensation had also occurred in this reaction in addition to the primary methoxyhydroxyl reaction.

Glycoluril Prepolymer Condensate C

Into a reaction vessel equipped as in Example A but also fitted with a fractionating columning was charged 1006 grams neopentyl glycol, 1266 grams terephthalic acid plus 0.8 grams butyl stannoic acid as the esterification catalyst. This polyester diol was processed by usual condenstion polymerization techniques to an acid number of 4.0 mg. KOH per gram. It had a tack temperature of 54°C, a hydroxyl content of 3.3% and a calculated molecular weight of 909. The batch was cooled to 150°C and then 1020 grams of TMMGU were added and melted in. 30 Grams Quadrol and 30 grams Polycat 200 were then added at 120°C. The temperature was raised slowly to 160°C distilling off methanol all the time. The batch was held at 160°C for a tack temperature of 75°C to 85°C and then discharged into a tray. The final product had a tack temperature of 75°C, a viscosity at 50% non-volatile in metapyrol of U-V, and a methoxy equivalent weight of 383.

EXAMPLE 2

Examples of hydroxyl-functional resins which can be used in combination with the alkoxy-methyl or methylol functional cross-linking prepolymer condensates of the present invention are as follows:

Polyester Resin 1

VPE 5802 is a hydroxyl-functional polyester resin supplied by Goodyear. The polyester has an acid no. of 12-13 mg. KOH per gram, a hydroxyl content of 1.75%, a tack temperature of 84°C, and a viscosity at 50% non-volatile in meta-pyrol of X-Y.

Styrene-Allyl Alcohol Copolymer 2

RJ100 is a copolymer of styrene and allyl alcohol supplied by Monsanto. It has a tack temperature of 88°C, a hydroxyl content of 5.7%, a molecular weight of 1500, and a viscosity at 50% non-volatile in meta-pyrol of P. The percent by weight composition calculated from the hydroxyl content is 80.7% styrene and 19.3% allyl alcohol.

Acrylic Resin 3

This is a resin prepared by the bulk (solvent-free) polymerization process from 64 grams styrene, 10 grams butyl acrylate, 24 grams hydroxy propyl methacrylate, 2 grams tertiary butyl penbenzoate, 2 grams methacrylic acid and 1 gram mercaptoethanol. It has a calculated hydroxyl content of 2.7%, an acid no. of 13, a tack temperature of 89°C, and a viscosity of X at 50% NV in meta-pyrol.

EXAMPLES 3-12

In order that the concept of the present invention be more completely understood, the following examples are set forth in which all parts are parts by weight unless otherwise stated. In particular, Examples 3-12 of Table I illustrate a series of powder paints in which the prepolymer condensates of the present invention are compared to similar paints made from unmodified TMMGU as described by U.S. Patent No. 4,118,437. All powder paints were compounded by standard methods well-known to powder paint chemists. The pigment (titanium dioxide) to binder ratio was 0.5 in all cases and all paints were applied by standard electrostatic spray equipment to 24 guage 4"x12" phosphate-treated steel panels, and baked in an air-circulated oven at 177°C for a period of 20 minutes. Cured film thicknesses ranged between 1.0 and 1.5 mils.

TABLE I

TMMGU and TMMGU PREPOLYMER CONDENSATE-BASED POWDER PAINT PROPERTIES

| Example No. | 3 | 4 | 5 | 6 | 7 | 8 | 9 | 10 | 11 | 12 |
|---|---|---|---|---|---|---|---|---|---|---|
| Cross-Linker | TMMGU | TMMGU | TMMGU | TMMGU | TMMGU | TMMGU | Ex.A | Ex.B | Ex.C | Ex.A |
| PBW Cross-Linker | 3.28 | 3.93 | 4.59 | 5.24 | 5.90 | 6.55 | 6.55 | 6.55 | 13.1 | 8.52 |
| VPE5802 (Ex. 1) | 62.3 | 61.6 | 60.9 | 60.3 | 59.6 | 59.0 | 59.0 | 59.0 | 52.4 | 57.0 |
| $TiO_2$ | 32.8 | 32.8 | 32.8 | 32.8 | 32.8 | 32.8 | 32.8 | 32.8 | 32.8 | 32.8 |
| Polycat 200 | 0.20 | 0.20 | 0.20 | 0.20 | 0.20 | 0.20 | 0.20 | 0.20 | 0.20 | 0.20 |
| Quadrol | 0.20 | 0.20 | 0.20 | 0.20 | 0.20 | 0.20 | 0.20 | 0.20 | 0.20 | 0.20 |
| Flow Agent | 0.65 | 0.65 | 0.65 | 0.65 | 0.65 | 0.65 | 0.65 | 0.65 | 0.65 | 0.65 |
| Degassing Agent(Benzoin) | 0.65 | 0.65 | 0.65 | 0.65 | 0.65 | 0.65 | 0.65 | 0.65 | 0.65 | 0.65 |
| % of Theoretical Cross-Linker | 60 | 73 | 86 | 99 | 112 | 126 | 75 | 51 | 63 | 100 |
| Phys. Stab. at 45°C for 7 days | Good | Good | Fair | Fair | V.Poor | V.Poor | Excel. | Excel. | Excel. | Excel. |
| Tack Temp. °C | 75 | 78 | 74 | 68 | 67 | 66 | 76 | 80 | 76 | 77 |
| Gel Time Secs.(204°C) | 60 | 50 | 40 | 45 | 55 | 55 | 30 | 80 | 35 | 70 |
| GLOSS-60° | 90 | 93 | 93 | 95 | 93 | 87 | 95 | 95 | 95 | 90 |
| -20° | 32 | 42 | 71 | 73 | 77 | 51 | 74 | 66 | 70 | 61 |

(continuation of - ) TABLE I

TMMGU and TMMGU PREPOLYMER CONDENSATE-BASED POWDER PAINT PROPERTIES

| Example No. | 3 | 4 | 5 | 6 | 7 | 8 | 9 | 10 | 11 | 12 |
|---|---|---|---|---|---|---|---|---|---|---|
| Δ E(177/204°C)(1) | 0.77 | 0.52 | 0.98 | 0.76 | 1.49 | 3.58 | 1.12 | 1.08 | 0.87 | 1.0 |
| MEK DOUBLE RUBS(2) | 150-200 | 350-400 | 300-350 | 450-500 | 350-400 | 350-400 | 300 | 300 | 250 | 300 |
| Impact (DIR/REV) In-Lbs. | 30/20 | 160/160 | 160/140 | 160/160 | 160/160 | 160/160 | 160/160 | 160/120 | 160/160 | 160/160 |
| Pencil Hardness(Faber) | H | H | H | H | H | H | 2H | H | H | 2H |

(1) Yellowing Index between 177°C and 204°C.

(2) No. of double rubs to expose the steel substrate.

It can be seen from the Table I results that excellent physical stability cannot be achieved using straight TMMGU as the cross-linking agent (Examples 3 to 8). Even at the lowest ratio of TMMGU to resin of 5/95 to 7/93 (Examples 3 to 5) the physical stability is not as good as with the prepolymer condensates of the present invention (Examples 9-12). At the 5/95 ratio of TMMGU to resin, cure and physical properties of the coating are already deficient so that it is not practical to reduce the level of TMMGU any farther to improve physical stability. Although the melting point of TMMGU (117°C) is actually higher than the tack temperatures of the prepolymer condensates fo the present invention (75-85°C), TMMGU is monomeric and miscible with the resin and thus, has a strong Tg-depressant effect in the finished powder blend. The data in Figure 1 provides further strong experimental evidence for undesirable Tg-depressant effect of monomeric methoxy-methyl type cross-linking agents in blend with a typical polyester (VPE5802) powder resin, compared to a typical prepolymer condensate of the present invention (prepolymer A). The prepolymers of the present invention are a much greater improvement,exhibit a minimum "eutectic" effect of mixed solids, and provides a substantial improvement in anti-caking effect when compared to TMMGU and hexamethoxymethyl melamine (HMMM).

Thus, it is apparent that the conflict between physical stability (caking) and coating performance with the use of TMMGU as a powder cross-linker has been resolved by the use of the prepolymer condensates of the present invention replacing the simple TMMGU. Increased levels of the prepolymer condensates up to stoichiometric proportions in Examples 9-11 provide even better properties and still have good package stability.

EXAMPLES 13 & 14

Table II gives further examples of powder formulae using a resin of Example 1 and a resin of Example 2.

TABLE II

PROPERTIES OF POWDER COATINGS BASED ON RJ100(Copolymer 2)

| Example No. | 13 | 14 |
|---|---|---|
| Cross-Linker | Ex.A | Ex.A |
| Resin | RJ100 | RJ100 |
| PBW-Cross-Linker | 20.9 | 13.1 |
| PBW Resin | 44.4 | 52.4 |
| $TiO_2$ | 32.7 | 32.7 |
| Polycat 200 | 0.36 | 0.23 |
| Quadrol | 0.36 | 0.23 |
| Flow Agent | 0.65 | 0.65 |
| Benzoin | 0.65 | 0.65 |
| % of Theoretical Cross-Linker | 100 | 53 |
| Phys. Stab.(45°C) | Good | Excel. |
| Tack Temp. °C | 77 | 76 |
| Gel Time (204°C) | 150 | 80 |
| GLOSS-60° | 101 | 102 |
| -20° | 98 | 96 |
| $\Delta$ E (177/204°C) | 1.40 | 2.20 |
| MEK Rubs | 350-400 | 350-400 |
| Impact (DIR/REV) | <5/<5 | <5/<5 |
| Pencil Hardness(Faber) | 2H | 2H |

EXAMPLE 15

Self-Curable Prepolymer 1

Into a reaction vessel equipped with stirrer, thermometer, nitrogen sparge inlet and fractionating column was charged 1151 grams neopentyl glycol 1448 grams terephthalic acid and 0.9 grams butyl stannoic acid as esterification catalyst. This polyester diol was processed by the usual condensation polymerization technique to an acid no. of 4 mg. KOH per gram. It had a tack temperature of 54°C, a hydroxyl content of 3.3% and a (calc.) molecular weight of 909. The batch was cooled to 140°C and to it was added 425 grams tetramethoxymethyl glycoluril. A total of 5.7 gm. PC200 and 6.0 gm. Quadrol were used to control the reaction rate. A strong nitrogen sparge was used throughout the condensation.

The final product had a tack temperature of 85°C, a viscosity at 50% in meta-pyrol of $Z_1$-$Z_2$ and a methoxy equivalent weight (MEW) of 1260. Applied to phosphate-treated 24 guage steel as a clear 1.0 mil coating and baked at 350°F for 20 minutes, it demonstrated a methyl ether ketone rub resistance of greater than 200 rubs, a pencil hardness of H and perfect flexibility around a conical mandrel.

Self-Curable Prepolymer 2

515 Grams of the polyester diol of Example 1, 22 grams benzyl alcohol and 85 grams TMMGU were processed similarly to Example 1. A total of 1.3 grams PC200 (.007 equiv.) and 1.3 grams Quadrol (.009 equiv.) were used to control reaction rate in a way similar to Example 1. The final product had a tack temperature of 85°C and a 50% NV viscosity in meta-pyrol of $Z_3$.

Self-Curable Prepolymer 3

Into a reaction flask equipped as in Example 1 but without the fractionating column was charged 240 grams hydrogenated bisphenol-A and 170 grams TMMGU. A strong nitrogen sparge and a temperature of 155°C were maintained throughout the polymerization. A total of 1.8 gm.

PC200 and 2.2 gm. Quadrol were added. The final product had a tack temperature of 84°C and a viscosity at 50% NV in meta-pyrol of L. With additional PC200 and Quadrol, it cured to a very hard, brittle film with greater than 200 MEK solvent rubs when baked 177°C for 20 minutes.

Self-Curable Prepolymer 4

To a reaction vessel equipped as in Example 1 were charged 3348 grams neopentyl glycol, 4580 grams terephthalic acid and 3.0 grams butyl stannoic acid. This hydroxyl-capped polyester was processed by usual condensation techniques to an acid no. of 2.7. It had a tack temperature of 70°C, a hydroxyl content of 2.34% (calc.) and a molecular weight (calc.) of 1450. To this was added, at 150°C, 782 grams TMMGU. Additions of PC200 and Quadrol were begun. A total of 7 gm. PC200 and 10 gm. Quadrol were added to control reaction rate. The final resin had a tack temperature of 80°C, a viscosity at 50% in meta-pyrol of V-W and a methoxy equivalent weight (MEW) of 1450. The distillate (150 grams) contained, by GC analysis, 111 grams methanol and no formaldehyde, indicating a clean methoxy-hydroxyl reaction.

A clear film of the resin, baked at 177°C/20 minutes, had excellent gloss, H pencil hardness, 200+ MEK rubs and passed an indirect impact test of 160 inch-pounds.

To illustrate some additional advantages of the self-curing prepolymers of the present invention over the TMMGU/Resin blends as described by U.S. Patent No. 418,437, the following data (Table I) is presented.

TABLE I

| | Prepolymers vs. Blend<br>Example 4 | Resin Blend *<br>VPE5802/TMMGU<br>(9/1) |
|---|---|---|
| Tack Temp°C | 80 | 78 |
| Viscosity (50% Meta-pyrol) | V-W | V-W |
| Caking Resistance | Good | Poor |
| Free TMMGU(by boiling water extraction) | 3.0% | 9.5% |
| Theoretical methanol evolved by curing | 2.2% | 3.8% |

*The resin blend is a 9/1 weight ratio of VPE5802/TMMGU. VPE5802 is a hydroxyl-functional polyester supplied by Goodyear. It has an acid no. of 12-13 mg. KOH per gram, a hydroxyl content of 1.75%, a tack temperature of 84°C, and a viscosity at 50% non-volatile in meta-pyrol of X-Y.

## CLAIMS

1. A thermosetting powder coating composition adapted to be applied to a substrate as a powder and heat fused to provide a cross-linked thermoset continuous surface coating, characterized by on a weight basis:

between 30% and 90% of a reactive matrix polymer having reactive groups selected from hydroxyl, carboxyl, and amide groups;

between 10% and 70% of a polymeric glycoluril having reactive methylol and/or alkoxy methyl groups for cross-linking with said reactive groups on said matrix polymer upon exposure to heat, said polymeric glycoluril having a molecular weight between about 500 and 5000 and being a condensation polymer of tetra-alkoxy-methyl glycoluril and/or tetra-methylol glycoluril containing at least 3 polymeric units selected from a self-condensate glycoluril polymer containing at least 3 glycoluril units or a diol condensate polymer containing at least 2 glycoluril units condensed with diol; and

said powder coating having a tack temperature greater than 70°C.

2. A composition according to claim 1, characterized in that the polymeric glycoluril is selected from a copolymer containing by weight between about 10% and 70% copolymerized diol, a homopolymer of tetra-alkoxy-methyl glycoluril, a homopolymer of tetra-methylol glycoluril, and a copolymer of tetra-alkoxy-methyl glycoluril and tetra-methylol glycoluril.

3. A composition according to claim 1 or 2, characterized in that the composition comprises by weight between 70% and 90% reactive matrix polymer and between 10% and 30% polymeric glycoluril.

4. A process for producing thermosetting powder paint containing a reactive matrix polymer having reactive hydroxyl, carboxyl, or amide groups, and a cross-linking component adapted to cross-link with the matrix polymer reactive groups upon being heat fused, characterized by

providing a polymeric glycoluril cross-linker having

a molecular weight between about 500 and 5000 by condensation polymerization of a glycoluril selected from tetra-alkoxy-methyl glycoluril or a tetra-methylol glycoluril wherein the polymeric glycoluril contains by weight between 5% and 40% alkoxy-methyl groups and/or methylol groups.

5. A process according to claim 4, characterized by providing in said powder paint composition a cross-linking polymer for cross-linking with the reactive groups of said matrix polymer, said cross-linking polymer produced by condensation polymerization of a glycoluril selected from tetra-alkoxy-methyl glycoluril or a tetra-methylol glycoluril to produce a polymeric glycoluril having a molecular weight between about 500 and 5000 and containing by weight between 4% and 40% alkoxy-methyl and/or methylol groups for cross-linking with the reactive groups on said matrix polymer, said polymeric glycol containing at least 3 polymeric units selected from a self-condensate glycoluril polymer containing at least 3 glycoluril units or a diol condensate polymer containing at least 2 glycoluril units condensed with diol.

6. A one-component thermosetting powder coating composition having a tack temperature above 70°C. and adapted to be applied to a substrate and heat fused into a cross-linked thermoset surface coating, said powder coating containing a thermosetting binder, characterized by

a self-curing glycoluril copolymer having between 0.5 and 2 equivalents of reactive alkoxy methyl or methylol groups per 1 equivalent coreactive hydroxyl, carboxyl, or amide groups adapted to cross-link with said alkoxy methyl or methylol groups, said copolymer having a molecular weight between 400 and 4000, an alkoxy methyl or methylol equivalent weight between 200 and 2500, and a coreactive hydroxyl, carboxyl or amide equivalent weight between 200 and 2500, said glycoluril copolymer containing between 8% and 70% by weight tetramethylol glycoluril and/or tetra-methyl glycoluril copolymerized with a poly-functional component selected from a polyol, diacid, or a diamide to provide a self-cross-linking copolymer upon exposure to heat.

7. A composition according to claim 6, characterized in that the self-curing glycoluril copolymer has a molecular weight between 800 and 2500, and the methylol or alkoxymethyl equivalent weight between 400 and 1500.

8. A composition according to claim 6 or 7, characterized in that the total ratio of equivalents of tetra-methylol and/or tetra-alkoxy groups on said copolymer to reactive hydroxyl, carboxyl, and/or amide groups on said polymer is between 0.8 and 1.2.

9. A composition according to any one of claims 6 to 8, characterized in that the self-curing copolymer contains between 2 and 8 total reactive groups per copolymer unit provided at least one reactive group is a methylol or alkoxyl methyl and at least one reactive group is a hydroxyl, a carboxyl, or an amide group.

10. A process for producing a one-component thermosetting powder paint composition according to claim 6, characterized by

providing a self-curing glycoluril copolymer comprising by weight between 8% and 70% glycoluril and having a molecular weight between 400 and 4000 by coreacting a tetra-methylol or tetra-alkoxy methyl glycoluril with a reactive material containing reactive hydroxyl, carboxyl, or amide groups by partial condensation to provide a self-curing glycoluril copolymer having between 0.5 and 2 equivalents of reactive alkoxy methyl or methylol groups per 1 equivalent of reactive hydroxyl, carboxyl, or amide group.

11. A process according to claim 10, characterized in that the partial condensation reaction is at temperatures between about 120°C. and 200°C.

12. A process according to claim 10 or 11, characterized in that between about 0.02 and 0.2 acid gram equivalents of sulfonic acid or other strong acid catalyst per 1000 grams of glycoluril are added to the reaction mixture as a partial condensation catalyst.

13. A process according to any one of claims 10 to 12, characterized in that up to about 0.4 equivalents of an amine buffer are added to the reaction mixture as a stabilizer.

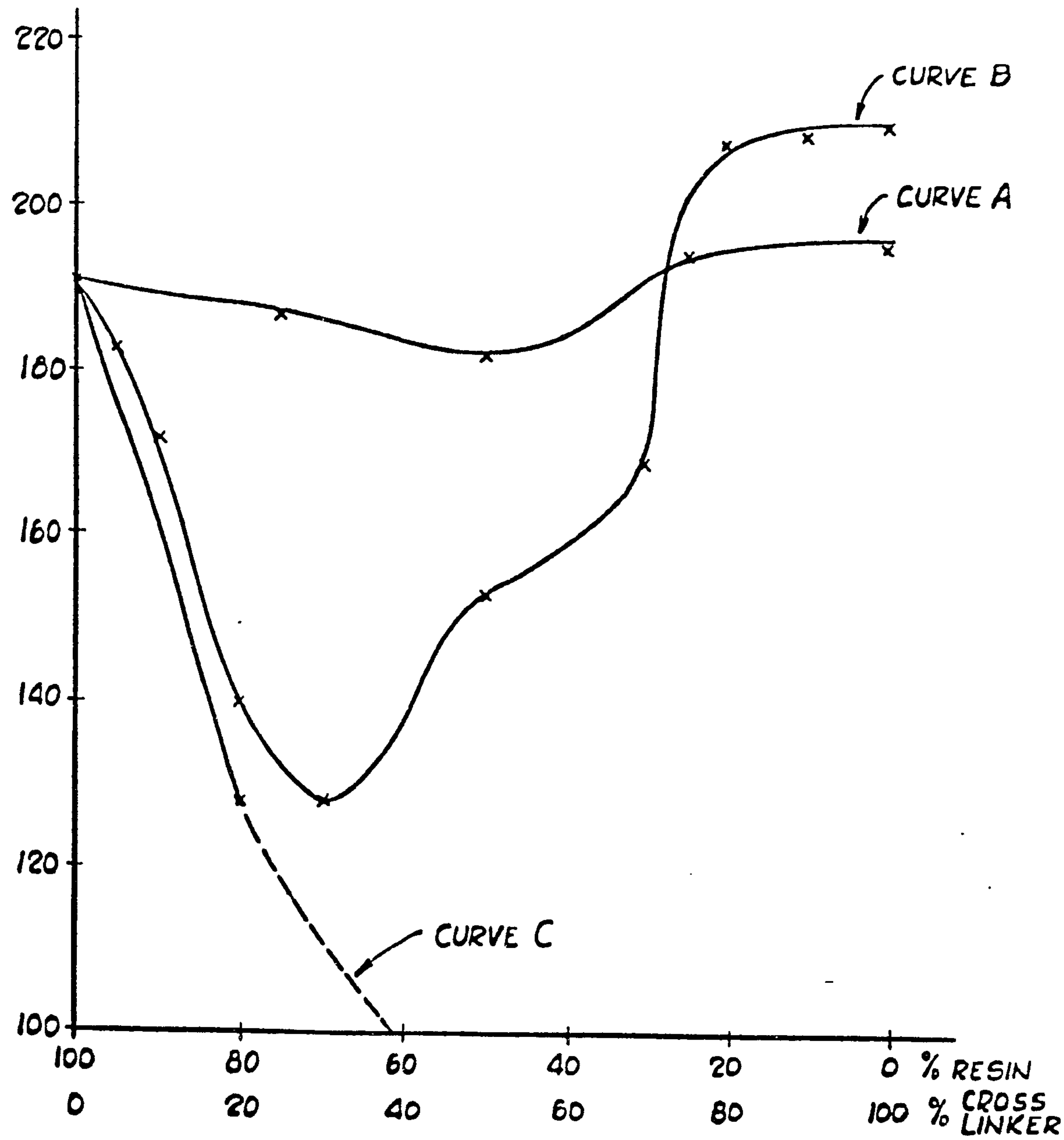
220
200
180
160
140
120
100
CURVE B
CURVE A
CURVE C
100 80 60 40 20 0 % RESIN
0 20 40 60 80 100 % CROSS LINKER

Fig. 1

European Patent Office

# EUROPEAN SEARCH REPORT

Application number
EP 80302028.8

| DOCUMENTS CONSIDERED TO BE RELEVANT | | | CLASSIFICATION OF THE APPLICATION (Int Cl 3) |
|---|---|---|---|
| Category | Citation of document with indication, where appropriate, of relevant passages | Relevant to claim | |
| | US - A - 4 105 708 (PAREKH) (08-08-1978)<br>+ Totality +<br>--<br>US - A - 4 064 191 (PAREKH)<br>+ Totality +<br>---- | 1-5<br><br><br><br>1-5 | C 09 D 3/48<br>C 08 K 5/34//<br>(C 08 K 5/34<br>C 08 L 61/32) |
| | | | TECHNICAL FIELDS SEARCHED (Int.Cl. 3) |
| | | | C 09 D<br>C 08 K<br>C 08 L 61/00 |
| | | | CATEGORY OF CITED DOCUMENTS |
| | | | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 27-08-1980 | PAMMINGER |